# EUROPÄISCHE PATENTSCHRIFT

(11) **EP 4 482 717 B1**
(45) Veröffentlichungstag und Bekanntmachung des Hinweises auf die Patenterteilung: **28.01.2026**
(21) Anmeldenummer: 23708399.3
(22) Anmeldetag: 16.02.2023
(51) Int. Cl.: B60T 1/06, F16D 55/40, F16D 65/18, F16D 121/04

(54) **MEHRKOLBENAUSRÜCKSYSTEM FÜR EINE BREMSVORRICHTUNG EINES FAHRZEUGS, BREMSVORRICHTUNG FÜR EIN FAHRZEUG MIT DEM MEHRKOLBENAUSRÜCKSYSTEM UND GETRIEBEANORDNUNG FÜR EIN FAHRZEUG MIT DER BREMSVORRICHTUNG**
MULTI-PISTON DISENGAGEMENT SYSTEM FOR A BRAKE DEVICE OF A VEHICLE, BRAKE DEVICE FOR A VEHICLE HAVING A MULTI-PISTON DISENGAGEMENT SYSTEM, AND TRANSMISSION ARRANGEMENT FOR A VEHICLE HAVING THE BRAKE DEVICE
SYSTÈME DE DÉBRAYAGE À PISTONS MULTIPLES POUR DISPOSITIF DE FREINAGE DE VÉHICULE, DISPOSITIF DE FREINAGE POUR VÉHICULE AYANT UN SYSTÈME DE DÉBRAYAGE À PISTONS MULTIPLES, ET AGENCEMENT DE TRANSMISSION POUR VÉHICULE DOTÉ DU DISPOSITIF DE FREINAGE

(30) Priorität: 22.02.2022 DE 102022104136
(43) Veröffentlichungstag der Anmeldung: 01.01.2025
(73) Patentinhaber: Schaeffler Technologies AG & Co. KG, 91074 Herzogenaurach (DE)
(72) Erfinder: ORTMANN, Simon, 76532 Baden-Baden (DE)
(74) Vertreter: Schaeffler Technologies
(86) Internationale Anmeldenummer: PCT/DE2023/100126
(87) Internationale Veröffentlichungsnummer: WO 2023/160752

(56) Entgegenhaltungen:
- DE-A1- 102020 104 771
- FR-A1- 2 820 794
- US-A- 3 970 174

## Beschreibung

Die Erfindung betrifft ein Mehrkolbenausrücksystem für eine Bremsvorrichtung eines Fahrzeugs mit den Merkmalen des Oberbegriffs des Anspruchs 1, eine Bremsvorrichtung für ein Fahrzeug mit dem Mehrkolbenausrücksystem und eine Getriebeanordnung für ein Fahrzeug mit der Bremsvorrichtung.

Kolbenausrücksysteme zur Betätigung von Kupplungen oder Bremsen in einem elektrischen Antriebsstrang eines Fahrzeugs sind aus dem Stand der Technik hinreichend bekannt. Beispielsweise beschreibt die Druckschrift DE 10 2020 104 771 A1 einen Nehmerzylinder für ein Ausrücksystem eines Fahrzeugs mit einem Gehäuse, welches einen Druckraum ausbildet und mit einem Kolben, der in dem Druckraum axial beweglich angeordnet ist. Zur Betätigung einer Kupplung kann der Kolben eine Betätigungskraft in die Kupplung einleiten. Weiterer Stand der Technik ist in der US 3 970 174 A offenbart. Aus der FR 2 820 794 A1 ist ein Mehrkolbenausrücksystem nach dem Oberbegriff des Anspruchs 1 bekannt.

Aufgabe der Erfindung ist es, ein funktional verbessertes Mehrkolbenausrücksystem für eine Bremsvorrichtung eines Fahrzeugs bereitzustellen. Diese Aufgabe wird durch ein Mehrkolbenausrücksystem für eine Bremsvorrichtung eines Fahrzeugs mit den Merkmalen des Anspruchs 1, durch eine Bremsvorrichtung für ein Fahrzeug mit dem Mehrkolbenausrücksystem mit den Merkmalen des Anspruchs 5 und durch eine Getriebeanordnung für ein Fahrzeug mit der Bremsvorrichtung mit den Merkmalen des Anspruchs 9 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Mehrkolbenausrücksystem, welches zur Integration in eine Bremsvorrichtung eines Fahrzeugs ausgebildet ist. Vorzugsweise ist das Mehrkolbenausrücksystem zur Betätigung einer Bremseinrichtung ausgebildet, wobei die Bremseinrichtung ein Bestandteil der Bremsvorrichtung ist. Zum Beispiel ist die Bremseinrichtung eine nasslaufende Lamellenbetriebsbremse, welche innerhalb eines Nassraums eines Elektrofahrzeugs oder Hybridfahrzeugs anordbar oder angeordnet ist. Vorzugsweise weist die Lamellenbetriebsbremse eine Lamellenpaketanordnung mit einer Mehrzahl an Reiblamellen auf. Der Nassraum kann durch ein Getriebegehäuse einer Getriebeanordnung für das Fahrzeug gebildet sein. Das Fahrzeug ist vorzugsweise ein Elektrofahrzeug, insbesondere ein elektrisch oder hybrid angetriebener PKW oder Nutzfahrzeug.

Das Mehrkolbenausrücksystem umfasst ein Ringgehäuse. Das Ringgehäuse weist eine Hauptachse auf, das eine axiale Richtung definiert. Das Ringgehäuse ist insbesondere konzentrisch und/oder koaxial zu der Hauptachse angeordnet.

Vorzugsweise weist das Ringgehäuse mindestens einen Strömungskanal, einen Fluideinlass und mehrere Druckräume auf, welche über den Strömungskanal strömungstechnisch miteinander verbunden sind. Insbesondere kann ein Fluid, z.B. eine Hydraulikflüssigkeit, durch den Fluideinlass in den Strömungskanal eingeleitet werden und von dort aus in die Druckräume strömen.

Das Ringgehäuse umfasst mehrere Gehäuseabschnitte, die vorzugsweise in Umlaufrichtung um das Ringgehäuse beabstandet voneinander angeordnet ist. In jedem Gehäuseabschnitt ist ein mit dem Fluid befüllbarer und/oder befüllter Druckraum angeordnet. Insbesondere ist der Druckraum in den Gehäuseabschnitt eingebracht und/oder in diesem ausgeformt.

Das Mehrkolbenausrücksystem umfasst mehrere hydraulische Betätigungsanordnungen. Beispielsweise umfasst das Mehrkolbenausrücksystem vier, sechs oder acht Betätigungsanordnungen. Jeder Betätigungsanordnung ist genau ein Gehäuseabschnitt zugeordnet. Vorzugsweise sind die Betätigungsanordnungen in Umlaufrichtung um das Ringgehäuse beabstandet voneinander angeordnet. Vorteilhaft ist, dass das Ringgehäuse und das daraus resultierend ringförmig ausgebildete Mehrkolbenausrücksystem bauraumsparend in der Bremsvorrichtung und/oder in dem Getriebegehäuse integriert werden können.

Jede Betätigungsanordnung umfasst eine Kolbenbaugruppe, wobei die Kolbenbaugruppe einen hydraulisch bewegbaren Kolben aufweist. Bei einer hydraulischen Druckbeaufschlagung kann der Kolben, insbesondere ausgehend von einer Ausgangsstellung, einen Betätigungshub in die axiale Richtung ausführen. Bei dem Betätigungshub kann der Kolben eine Betätigungskraft erzeugen, mittels der die Bremseinrichtung aktivierbar ist. Insbesondere kann bei und/oder nach der Ausführung des Betätigungshubs eine Druckkraft als die Betätigungskraft in eine Lamellenpaketanordnung der Bremseinrichtung eingeleitet werden, wenn das Mehrkolbenausrücksystem in der Bremsvorrichtung integriert ist. Durch die Betätigungskraft können Reiblamellen der Lamellenpaketanordnung zur Erzeugung einer Bremskraft reibschlüssig aneinandergepresst werden.

Vorzugsweise umfasst jede Betätigungsanordnung eine Federbaugruppe, welche eine Rückstelleinrichtung umfasst. Vorzugsweise ist die Rückstelleinrichtung dazu ausgebildet, den Kolben der jeweiligen Betätigungsanordnung in die Ausgangsstellung zurückzustellen. Bevorzugt führt der Kolben einen Rückhub aus, wenn er mittels der Rückstelleinrichtung zurückgestellt wird.

Das Mehrkolbenausrücksystem weist eine Druckübertragungsvorrichtung auf. Die Druckübertragungsvorrichtung ist dazu ausgebildet und/oder angeordnet, die durch den Kolben übertragene Betätigungskraft in axialer Richtung auf die Lamellenpaketanordnung zu übertragen und/oder in diese einzuleiten. Insbesondere steht die Druckübertragungsvorrichtung hierfür mit dem Kolben in einer Wirkverbindung.

Erfindungsgemäß kann die Betätigungskraft des Kolbens in das Ringgehäuse abgeleitet werden. Vorzugsweise kann die Betätigungskraft mittels der Druckübertragungsvorrichtung in axialer Richtung in das Ringgehäuse abgeleitet werden. Insbesondere kann die Betätigungskraft in dieselbe Richtung in das Ringgehäuse abgeleitet werden, in die der Kolben den Betätigungshub ausführt.

Die Ableitung der Betätigungskraft auf das Ringgehäuse hat den Vorteil, dass ein Kraftschluss des Mehrkolbenausrücksystems geschlossen ist und die Betätigung der Bremseinrichtung axialkraftfrei in einem das Mehrkolbenausrücksystem umgebenden Bauraum, insbesondere in dem durch das Getriebegehäuse gebildeten Nassraum, erfolgen kann.

In einer bevorzugten Ausführungsform der Erfindung umfasst die Druckübertragungsvorrichtung mindestens eine Verbindungseinrichtung, insbesondere ein ringförmiges Verbindungsblech oder mehrere Verbindungsstäbe, welche bevorzugt konzentrisch und/oder koaxial zu der Hauptachse angeordnet sind. Vorzugsweise kann die Betätigungskraft des Kolbens bei dem axial gerichteten Betätigungshub in die Verbindungseinrichtung eingeleitet werden.

Optional ergänzend umfasst die Druckübertagungseinrichtung mindestens eine Zugeinrichtung, insbesondere einen Zuganker. Vorzugsweise ist die Zugeinrichtung mit der Verbindungseinrichtung wirkverbunden, z.B. mit dieser verpresst. Vorzugsweise kann Zugeinrichtung bei dem Betätigungshub des Kolbens in eine Druckstellung überführt werden, um in der Druckstellung eine axial gerichtete Druckkraft gegen die Reiblamellen der Lamellenpaketanordnung auszuüben.

Eine mögliche konstruktive Umsetzung der Erfindung sieht vor, dass das Ringgehäuse mindestens eine Befestigungsschnittstelle umfasst, mittels der das Ringgehäuse an einer Umgebungsstruktur, z.B. an dem Getriebegehäuse, befestigt werden kann. Beispielsweise ist die mindestens eine Befestigungsschnittstelle durch mehrere Schraubeinrichtungen gebildet, welche optional ein Loch, eine Bohrung und/oder eine Schraube umfassen. Vorzugsweise sind die Schraubeinrichtungen in Umlaufrichtung des Ringgehäuses um die Hauptachse beabstandet zueinander an dem Ringgehäuse angeordnet. Bevorzugt sind die Schraubeinrichtungen an einem Innenumfang des Ringgehäuses und/oder radial innenliegend angeordnet. Alternativ sind die Schraubeinrichtungen an einem Außenumfang des Ringgehäuses und/oder radial außenliegend angeordnet.

In einer alternativ möglichen konstruktiven Umsetzung der Erfindung ist die mindestens eine Befestigungsschnittstelle durch eine konzentrisch zu der Hauptachse angeordnete Zentralmutter gebildet. Vorzugsweise ist die Zentralmutter mit dem Ringgehäuse verbunden. In einer weiteren möglichen alternativen konstruktiven Umsetzung der Erfindung ist es mögliche, dass die mindestens eine Befestigungsschnittstelle durch einen auf die Hauptachse bezogenen koaxialen und/oder konzentrischen Sicherungsring gebildet ist, welcher mit dem Ringgehäuse verbunden ist.

In einer bevorzugten Ausgestaltung der Erfindung umfasst jede Betätigungsanordnung eine Halteplatte. Vorzugsweise ist die Halteplatte in der axialen Richtung auf den der jeweiligen Betätigungsanordnung zugeordneten Gehäuseabschnitt aufgesetzt. Bevorzugt ist die Halteplatte kraft- und/oder formschlüssig mit dem Gehäuseabschnitt verbunden, beispielsweise mit diesem verschraubt.

In einer möglichen konstruktiven Realisierung der Erfindung umfasst die Federbaugruppe ein Federblech, einen Federteller und eine Spiralfeder. Bevorzugt ist der Federteller form- und/oder kraftschlüssig mit dem Federblech verbunden, insbesondere mit diesem verschraubt. Vorzugsweise ist die Spiralfeder zwischen dem Federteller und der Halteplatte angeordnet. Insbesondere stützt sich die Spiralfeder mit einem Ende an der Halteplatte und mit dem anderen Ende an dem Federteller ab.

In einer weiteren möglichen konstruktiven Realisierung der Erfindung ist die Federbaugruppe mit der Kolbenbaugruppe der jeweiligen Betätigungsanordnung wirkverbunden, sodass die Federbaugruppe bei dem Betätigungshub und dem Rückhub des entsprechenden Kolbens mitgenommen wird. Beispielsweise ist der Kolben form- und/oder kraftschlüssig mit dem Federblech verbunden. Vorzugsweise drückt der Kolben gegen das Federblech, wenn er den Betätigungshub in die axiale Richtung ausführt. Dadurch werden das Federblech und der daran befestigte Federteller entgegen der Vorlast der Spiralfeder in die axiale Richtung mitgenommen.

Wenn die hydraulische Druckbeaufschlagung des Kolbens nachlässt, wird dieser durch die Vorlast der Spiralfeder in die Ausgangsstellung zurückgestellt. Insbesondere dient die Spiralfeder als Rückstelleinrichtung.

In einer bevorzugten konstruktiven Umsetzung der Erfindung ist die mindestens eine Verbindungseinrichtung der Druckübertragungsvorrichtung mit dem Kolben wirkverbunden. Hierzu steht die Verbindungseinrichtung mit dem Federblech in einer Wirkverbindung. Zum Beispiel sind die Verbindungseinrichtung und das Federblech form- und/oder kraftschlüssig miteinander verbunden, z.B. miteinander verschraubt. Insbesondere kann die Verbindungseinrichtung gemeinsam mit dem Federblech in die axiale Richtung bewegt werden, wenn der Kolben den Betätigungshub ausführt. Vorzugsweise erstreckt sich die Verbindungseinrichtung, z.B. ausgehend von dem Federblech, in eine axiale Gegenrichtung, welche insbesondere entgegengesetzt zu der axialen Richtung ist. Insbesondere verläuft die Verbindungseinrichtung axial entgegengerichtet durch die Lamellenpaketanordnung der Bremseinrichtung hindurch. Die Zugeinrichtung der Druckübertragungsvorrichtung ist bevorzugt an einem in die axiale Gegenrichtung gerichteten Ende der Verbindungseinrichtung angeordnet.

Eine Bremsvorrichtung für ein Fahrzeug mit dem Mehrkolbenausrücksystem nach der bisherigen Beschreibung und/oder nach einem der Ansprüche 1 bis 4 bildet einen weiteren Gegenstand der Erfindung. Die Bremsvorrichtung umfasst eine Bremseinrichtung zur Erzeugung einer Bremskraft. Vorzugsweise bildet das Mehrkolbenausrücksystem eine Aktuatoreinrichtung zur Aktivierung der Bremseinrichtung.

Die Bremseinrichtung weist eine Lamellenpaketanordnung mit einer Mehrzahl an Reiblamellen auf. Vorzugsweise ist die Lamellenpaketanordnung koaxial und/oder konzentrisch zu der Hauptachse angeordnet. Bei den Reiblamellen handelt es sich um Innenlamellen, welche z.B. rotierbar angeordnet sind und um Außenlamellen, welche z.B. rotationsfest angeordnet sind. Bevorzugt sind die Innenlamellen von einem z.B. rotierbaren Innenlamellenträger getragen. Vorzugsweise sind die Reiblamellen axial bewegbar, insbesondere gegeneinander verschiebbar, angeordnet und/oder ausgebildet.

**In** einer möglichen konstruktiven Ausgestaltung der Erfindung ist das Mehrkolbenausrücksystem in der axialen Richtung vor der Bremseinrichtung angeordnet. Vorzugsweise ist die Lamellenpaketanordnung von dem Kolben abgewandt angeordnet.

**In** einer bevorzugten Ausführungsform der Erfindung erstreckt sich die mindestens eine Verbindungseinrichtung der Druckübertragungseinrichtung des Mehrkolbenausrücksystems in der axialen Gegenrichtung durch die Lamellenpaketanordnung, insbesondere durch die Außenlamellen, hindurch. Vorzugsweise umgreift die Zugeinrichtung zumindest abschnittsweise die in der axialen Gegenrichtung angeordnete äußerste Reiblamelle, insbesondere Außenlamelle, und drückt in der Druckstellung gegen diese, sodass die Reiblamellen in der axialen Richtung reibschlüssig aneinandergelegt werden und die Bremskraft erzeugen können.

In einer weiteren bevorzugten Ausführungsform der Erfindung stützen sich die Reiblamellen in der axialen Richtung an dem Ringgehäuse des Mehrkolbenausrücksystems ab, wenn sie in der Druckstellung der Zugeinrichtung reibschlüssig aneinandergelegt sind. Vorzugsweise kontaktiert eine in der axialen Richtung äußerste Reiblamelle, insbesondere Außenlamelle, in der Druckstellung der Zugeinrichtung das Ringgehäuse. Insbesondere kann dadurch die Betätigungskraft des Kolbens über die Lamellenpaketanordnung und unter Zwischenschaltung der Druckübertagungsvorrichtung auf das Ringgehäuse abgeleitet werden.

Einen weiteren Gegenstand der Erfindung bildet eine Getriebeanordnung für ein Fahrzeug. Die Getriebeanordnung weist ein Getriebegehäuse, ein Getriebe, z.B. ein Planentengetriebe, und die Bremsvorrichtung nach der bisherigen Beschreibung und/oder nach einem der Ansprüche 5 bis 8 auf. Das Getriebe und die Bremsvorrichtung sind in dem Getriebegehäuse aufgenommen. Bevorzugt greifen die Außenlamellen formschlüssig in das Getriebegehäuse ein, sodass sie gegen eine Rotation gesichert sind und sodass sie axial bewegbar sind.

In einer möglichen konstruktiven Realisierung der Erfindung ist die Bremsvorrichtung, insbesondere die Bremseinrichtung, so in dem Getriebegehäuse angeordnet, dass sie das Getriebe auf die Hauptachse bezogen radial umgreift. Vorzugsweise weisen die Innenlamellen eine Innenverzahnung auf, mit der sie in eine passende Verzahnung einer Komponente des Getriebes kämmen können.

In einer möglichen konstruktiven Realisierung der Erfindung ist die Umgebungsstruktur, an der das Ringgehäuse des Mehrkolbenausrücksystems mittels der mindestens einen Befestigungsschnittstelle befestigt ist, durch das Getriebegehäuse gebildet. Vorzugsweise kann die auf das Ringgehäuse abgeleitete Betätigungskraft des Kolbens dadurch in das Getriebegehäuse eingeleitet werden. Insbesondere werden die Bremsmomente der Bremseinrichtung auf das Getriebegehäuse abgeleitet, wenn sich die Reiblamellen an dem Ringgehäuse abstützen. Vorteilhaft daran ist, dass keine zusätzlichen Gehäusebauteile benötigt werden, um eine Ausrückkraft der Bremseinrichtung abzustützen.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Draufsicht auf eine Bremsvorrichtung für ein Fahrzeug;
- Figur 2: eine Draufsicht in einer axialen Richtung auf die Bremsvorrichtung;
- Figur 3: eine Schnittansicht der Bremsvorrichtung aus der Figur 2 entlang der Schnittlinie B-B;
- Figur 4: ein Querschnitt der Bremsvorrichtung aus der Figur 2 entlang der Schnittlinie A-A
- Figur 5: ein Querschnitt der Bremsvorrichtung aus der Figur 2 entlang der Schnittlinie C-C.

Einander entsprechende oder gleiche Teile sind in den Figuren jeweils mit den gleichen Bezugszeichen versehen.

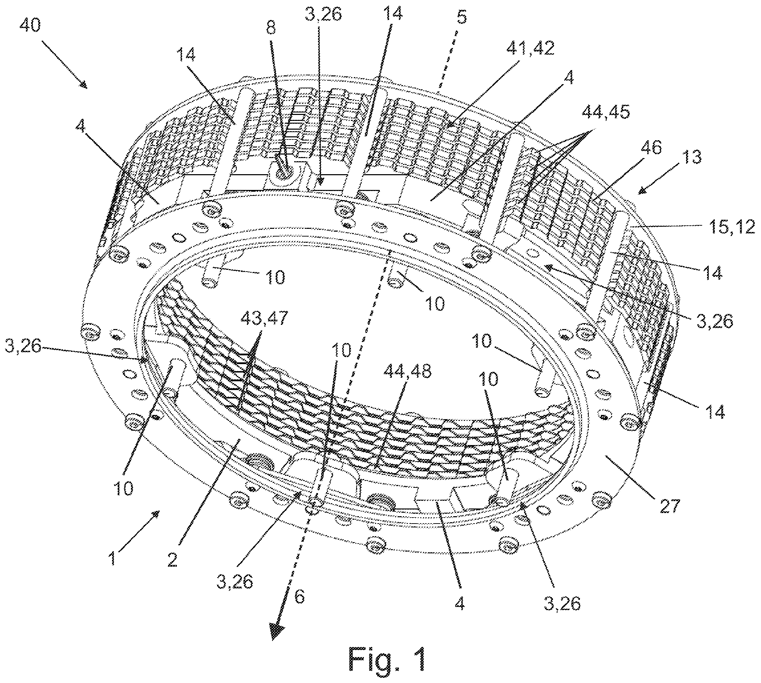

**In** der Figur 1 ist eine perspektivische Draufsicht auf eine Bremsvorrichtung 40 für ein Fahrzeug gezeigt. Die Bremsvorrichtung 40 kann einen Bestandteil einer Getriebeanordnung mit einem Getriebegehäuse, das mit einem Nassraumfluid befüllt ist, und mit einem Getriebe, insbesondere mit Planetengetriebe, bilden. Sie kann gemeinsam mit dem Getriebe in dem Getriebegehäuse angeordnet sein und dort eine Bremskraft zum Abbremsen mindestens einer Komponente des Getriebes erzeugen. Das Getriebe und die Bremsvorrichtung 40 sind bezogen auf eine Hauptachse 5 der Bremsvorrichtung 40 konzentrisch und/oder koaxial angeordnet, wobei die Bremsvorrichtung 40 das Getriebe radial umgibt. Die Hauptachse 5 definiert eine axiale Richtung 6.

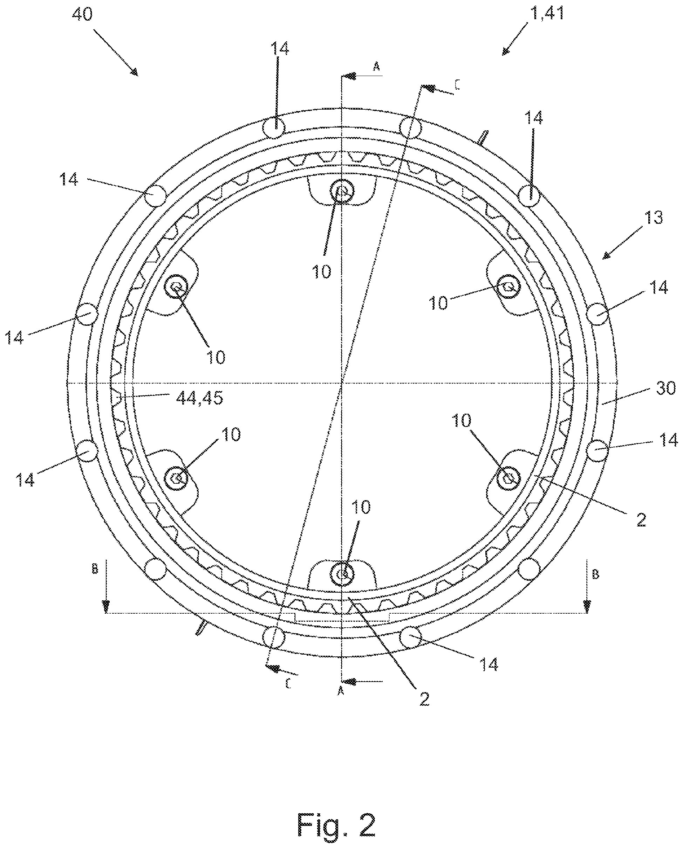

Die Figur 2 zeigt die Bremsvorrichtung 40 in einer Draufsicht in die axiale Richtung 6. In einer Zusammenschau mit der Figur 1 weist die Bremsvorrichtung 40 eine Bremseinrichtung 41 auf, welche als eine nasslaufende Reiblamellenbremse ausgebildet ist. Die Bremseinrichtung 41 weist eine Lamellenpaketanordnung 42 mit rotierbaren Innenlamellen 43 und mit rotationsfesten Außenlamellen 44 auf. Die Lamellen 43, 44 sind in die axiale Richtung 6 und in eine axiale Gegenrichtung beweglich, insbesondere verschiebbar, angeordnet. Die Außenlamellen 44 können mit einer Außenverzahnung 45 formschlüssig in eine passende Verzahnung des Getriebegehäuses eingreifen, sodass sie axial bewegbar sind und zugleich gegen eine Rotation um die Hauptachse 5 gesichert sind. Die Innenlamellen 43 sind auf einem rotierbaren Innenlamellenträger angeordnet. Sie weisen eine Innenverzahnung 47 auf, mit der sie mit einer passenden Verzahnung einer Komponente des Getriebes kämmen können. Bei der axialen Verschiebung der Lamellen 43, 44 werden diese reibschlüssig aneinandergelegt, sodass eine Bremskraft zum Abbremsen der Komponente des Getriebes erzeugt werden kann.

Die Bremsvorrichtung 40 weist ein Mehrkolbenausrücksystem 1 auf, welches eine Aktuatoreinrichtung zur Betätigung der Bremseinrichtung 41 durch Übertragung und Einleitung von Druckkräften als Betätigungskräfte bildet. Das Mehrkolbenausrücksystem 1 ist bezogen auf die Hauptachse 5 konzentrisch und/oder koaxial zu der Bremseinrichtung 41 angeordnet. Es weist ein Ringgehäuse 2 und mehrere, z.B. sechs, Betätigungsanordnungen 3 auf. Die Betätigungsanordnungen 3 sind in Umlaufrichtung um die Hauptachse 5 an dem Ringgehäuse 2 angeordnet und abschnittsweise in diesem aufgenommen.

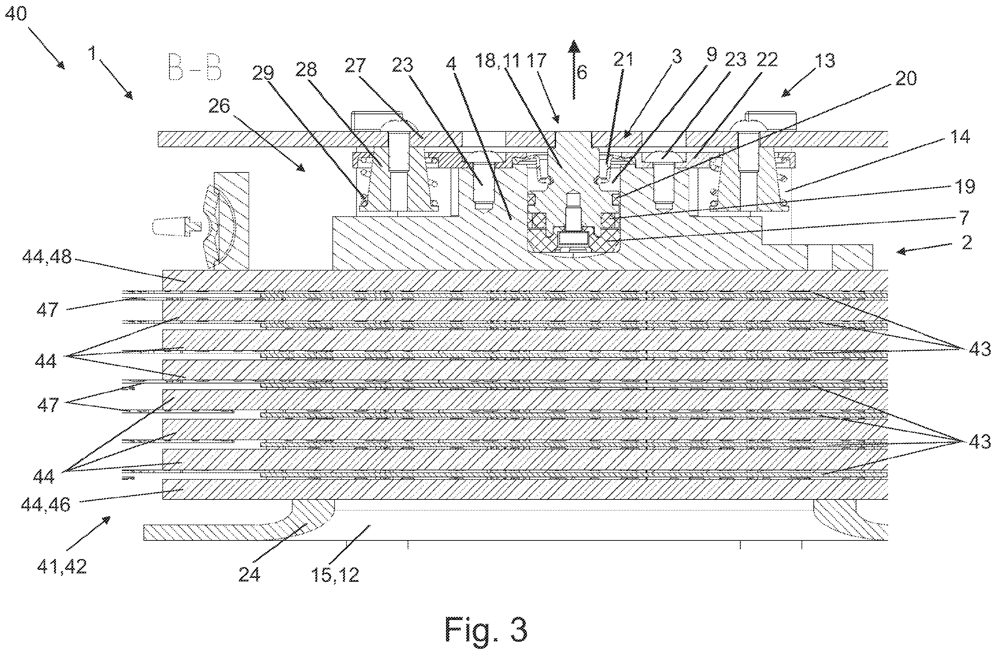

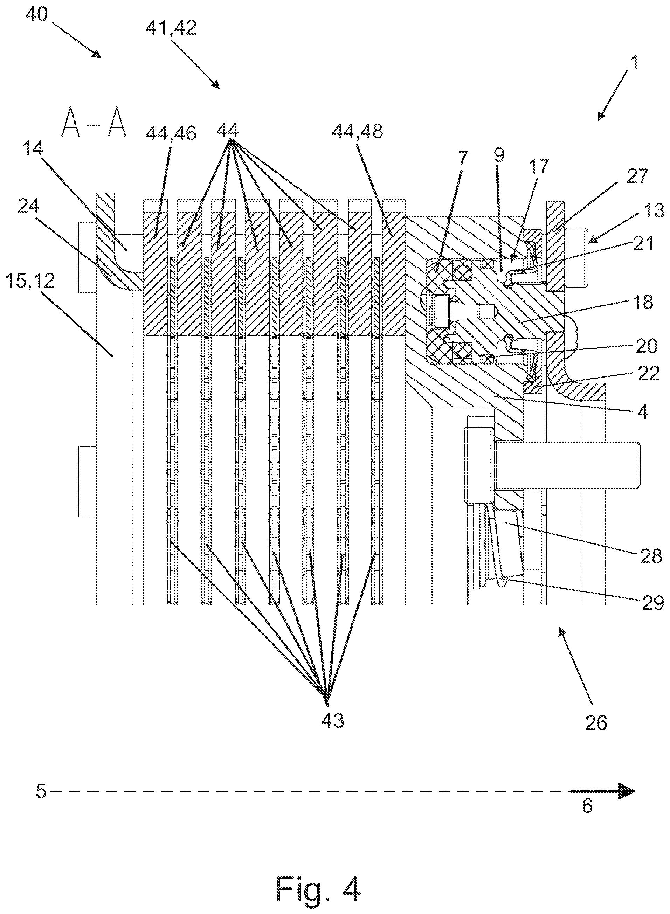

Das Ringgehäuse 2 umfasst mehrere, z.B. sechs, Gehäuseabschnitte 4, wobei in jedem Gehäuseabschnitt 4 ein mit einem Fluid befüllbarer und/oder befüllter Druckraum 9 (siehe Figuren 3 und 4) integriert ist. Die Druckräume 9 in dem Ringgehäuse 2 sind untereinander strömungstechnisch durch mindestens einen Strömungskanal verbunden, der in dem Ringgehäuse 2 integriert ist. Das Ringgehäuse 2 weist einen Fluideinlass 8 (siehe Figur 1) auf, durch welchen das Fluid in den Strömungskanal und in die Druckräume 9 eingeleitet werden kann. Das Fluid ist unterschiedlich zu dem Nassraumfluid, das in dem Getriebegehäuse angeordnet ist.

Über mehrere, als Schraubeinrichtungen ausgebildete Befestigungseinrichtungen 10, die in Umlaufrichtung um die Hauptachse 5 beanstandet voneinander und radial innenliegend an dem Ringgehäuse 2 angeordnet sind, kann das Mehrkolbenausrücksystem 1 an dem Getriebegehäuse befestigt sein.

In der Figur 3 ist eine Schnittansicht der Bremsvorrichtung 40 aus der Figur 2 entlang der Schnittlinie B-B gezeigt. Es ist die Bremseinrichtung 41 und das Mehrkolbenausrücksystem 1 dargestellt. Das Mehrkolbenausrücksystem 1 ist in der axialen Richtung 6 vor der Bremseinrichtung 41 angeordnet.

Zu erkennen sind die Außenlamellen 44 und die Innenlamellen 43 der Lamellenpaketanordnung 42 der Bremseinrichtung 41, ein Gehäuseabschnitt 4 des Ringgehäuses 2 des Mehrkolbenausrücksystems 1 und eine Betätigungsanordnung 3 des Mehrkolbenausrücksystems 1, wobei die Betätigungsanordnung 3 dem Gehäuseabschnitt 4 zugeordnet ist. Der Gehäuseabschnitt 4 weist den Druckraum 9 auf, welcher in den Gehäuseabschnitt 4 eingebracht ist.

Die Betätigungsanordnung 3 umfasst eine Kolbenbaugruppe 17 mit einem Kolben 18, welcher mit einem Führungskörper 7 verschraubt ist. Der Kolben 18 und der Führungskörper 7 sind gemeinsam in dem Druckraum 9 in die axiale Richtung 6, also von der Lamellenpaketanordnung 42 weggerichtet, beweglich angeordnet. Bei der axialen Bewegung führt der Führungskörper 7 den Kolben 18.

Die Betätigungsanordnung 3 umfasst eine Gleitbanddichtung 19, eine weitere Dichtung 20 und eine axial-translatorische Dichtung 21. Die Gleitbanddichtung 19 und die weitere Dichtung 20 sind als O-Ringe ausgebildet und an dem Kolben 18 bewegungsfest angeordnet. Sie dichten den Druckraum 9 bei der Bewegung des Kolbens 18 ab. Die axial-translatorische Dichtung 21 dichtet den Druckraum 9 gegenüber dem mit dem Nassraumfluid befüllten Getriebegehäuse ab, wenn die Bremsvorrichtung 40 in dem Getriebegehäuse angeordnet ist.

Die Betätigungsanordnung 3 weist eine Halteplatte 22 auf, welche in der axialen Richtung 6 an dem Gehäuseabschnitt 4 angeordnet und mit diesem mittels zweier Schrauben 23 verschraubt ist.

Der Kolben 18 kann bei einer hydraulischen Druckbeaufschlagung mittels des in den Druckraum 9 eingeleiteten Fluids relativ zu dem Gehäuseabschnitt 4 und zu der daran befestigten Halteplatte 22 einen Betätigungshub in die axiale Richtung 6 ausführen. Durch den Betätigungshub wird der Kolben 18 in eine Betätigungsstellung 11 überführt, in der die Bremseinrichtung 41 betätigt ist.

Die Betätigungsanordnung 3 weist eine Federbaugruppe 26 auf. Die Federbaugruppe 26 umfasst ein Federblech 27 und zwei Federteller 28. Das Federblech 27 ist in der axialen Richtung 6 vor der Halteplatte 22 angeordnet. Die Federteller 28 sind kegelstumpfförmig ausgebildet und mit dem Federblech 27 verschraubt. Die Federbaugruppe 26 weist zwei Spiralfedern 29 auf, welche an den Federtellern 28 angeordnet sind und diese umgeben. Die Spiralfedern 29 stützen sich mit einem Ende an der Halteplatte 22 ab und mit dem anderen Ende an Abstützflächen der Federteller 28 ab.

Der Kolben 18 ist form- und/oder kraftschlüssig mit dem Federblech 27 verbunden. Bei dem Betätigungshub des Kolbens 18 wird das Federblech 27 gemeinsam mit den Federtellern 28 entgegen einer Vorlast der Spiralfedern 29 in die axiale Richtung 6 bewegt. Die Spiralfedern 29 fungieren als Rückstelleinrichtungen, welche den Kolben 18 bei einem Nachlassen der hydraulischen Druckbeaufschlagung axial gegengerichtet in die Ausgangsstellung zurückstellen.

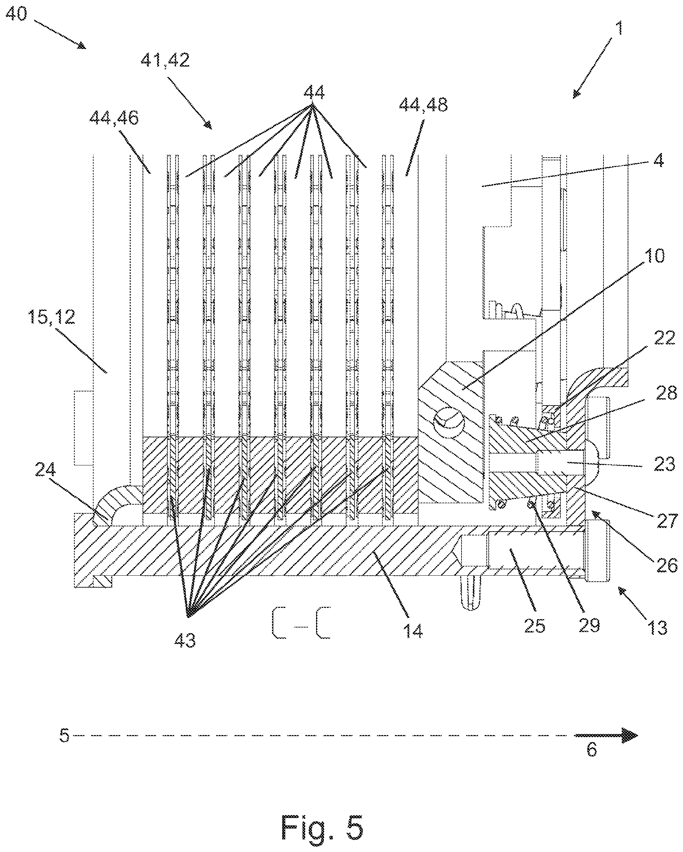

Die Betätigungsanordnung 3 weist eine Druckübertragungseinrichtung 13 zur Übertragung und Einleitung der Betätigungskraft des Kolbens 18 in die Reiblamellenpaketanordnung 42 auf. Die Druckübertragungseinrichtung 13 ist in unterschiedlichen Perspektiven aus den Figuren 1 bis 5 zu entnehmen. Hierbei zeigen die Figur 4 einen Querschnitt der Bremsvorrichtung 40 aus der Figur 2 entlang der Schnittlinie A-A und die Figur 5 einen Querschnitt der Bremsvorrichtung 40 aus der Figur 2 entlang der Schnittlinie C-C.

Die Druckübertragungseinrichtung 13 umfasst mindestens eine konzentrisch und/oder koaxial zu der Hauptachse 5 angeordnete Verbindungseinrichtung 14, welche als mehrere Verbindungsstäbe ausgebildet ist. Die Verbindungsstäbe verlaufen von der Betätigungsanordnung 3 in der axialen Gegenrichtung zu einer in der axialen Gegenrichtung angeordneten äußersten Außenlamelle 46 der Lamellenpaketanordnung 42. Hierzu erstrecken sich die Verbindungsstäbe durch die Lamellenpaketanordnung 42, insbesondere durch die Außenlamellen 44, hindurch. Jeder Verbindungsstab ist mit einer als Zuganker ausgebildeten Zugeinrichtung 15 form- und/oder kraftschlüssig, z.B. durch eine Pressverbindung 24 verbunden. Die Zugeinrichtung 15 umgreift die Lamellenpaketanordnung 42, insbesondere die in der axialen Gegenrichtung angeordnete äußerste Außenlamelle 46, zumindest abschnittsweise.

Die Verbindungseinrichtung 14 ist mit dem Federblech 27 mittels weiterer Schrauben 25 verschraubt. Dadurch wird die Verbindungseinrichtung 14 gemeinsam mit dem Federblech 27 in die axiale Richtung 6 mitgenommen, wenn der Kolben 18 den Betätigungshub ausführt. Die Zugeinrichtung 15 wird bei dem Betätigungshub des Kolbens 18 durch die Verbindungseinrichtung 14 mitgenommen und in die axiale Richtung 6 bewegt, sodass sie die Zugeinrichtung 15 eine Druckstellung 12 einnimmt, in der sie axial gegen die in der axialen Gegenrichtung äußerste Außenlamelle 46 drückt und die Lamellen 43, 44 der Lamellenpaketanordnung 42 reibschlüssig aneinanderlegt.

Die Lamellenpaketanordnung 42, insbesondere die Lamellen 43, 44, werden in der Druckstellung 12 der Zugeinrichtung 15 in axialer Richtung 6 gegen das Ringgehäuse 2 gedrückt. Eine in der axialen Richtung 6 angeordnete äußerste Außenlamelle 47 kontaktiert das Ringgehäuse 2. Dadurch kann eine Ausrückkraft der Bremseinrichtung 41 durch das Ringgehäuse 2 abgestützt werden. Die Betätigungskraft des Kolbens 18 kann über die Kraftübertragungseinrichtung 13 und die Lamellenpaketanordnung 42 in das Ringgehäuse 2 und von diesem in das Getriebegehäuse abgeleitet werden, wenn das Ringgehäuse 2 mittels der Befestigungsschnittstellen 10 an dem Getriebegehäuse befestigt ist.

### Bezugszeichenliste

- 1: Mehrkolbenausrücksystem
- 2: Ringgehäuse
- 3: Betätigungsanordnung
- 4: Gehäuseabschnitt
- 5: Hauptachse
- 6: axiale Richtung
- 7: Führungskörper
- 8: Fluideinlass
- 9: Druckraum
- 10: Befestigungsschnittstellen
- 11: Betätigungsstellung
- 12: Druckstellung
- 13: Druckübertragungseinrichtung
- 14: Verbindungseinrichtung
- 15: Zugeinrichtung
- 16: nicht belegt
- 17: Kolbenbaugruppe
- 18: Kolben
- 19: Gleitbanddichtung
- 20: weitere Dichtung
- 21: axial-translatorische Dichtung
- 22: Halteplatte
- 23: Schrauben
- 24: Pressverbindung
- 25: weitere Schrauben
- 26: Federbaugruppe
- 27: Federblech
- 28: Federteller
- 29: Spiralfedern
- 40: Bremsvorrichtung
- 41: Bremseinrichtung
- 42: Lamellenpaketanordnung
- 43: Innenlamellen
- 44: Außenlamellen
- 45: Außenverzahnung
- 46: in axialer Gegenrichtung äußerste Außenlamelle
- 47: Innenverzahnung
- 48: in axialer Richtung äußerste Außenlamelle

## Patentansprüche

1. Mehrkolbenausrücksystem (1) für eine Bremsvorrichtung (40) eines Fahrzeugs,
mit einem Ringgehäuse (2), wobei das Ringgehäuse (2) eine Hauptachse (5) aufweist, wobei die Hauptachse (5) eine axiale Richtung (6) definiert,
wobei das Ringgehäuse (2) mehrere Gehäuseabschnitte (4) umfasst, wobei in jedem Gehäuseabschnitt (4) ein mit einem Fluid befüllbarer und/oder befüllter Druckraum (9) angeordnet ist,
mit mehreren hydraulischen Betätigungsanordnungen (3), wobei jeder Betätigungsanordnung (3) ein Gehäuseabschnitt (4) zugeordnet ist,
wobei jede Betätigungsanordnung (3) eine Kolbenbaugruppe (17) mit einem hydraulisch bewegbaren Kolben (18) aufweist, wobei der Kolben (18) bei einer hydraulischen Druckbeaufschlagung einen Betätigungshub in die axiale Richtung (6) ausführen kann und eine Betätigungskraft zur Aktivierung einer Bremseinrichtung (41) der Bremsvorrichtung (40) erzeugen kann,
**dadurch gekennzeichnet, dass**
die Betätigungskraft in das Ringgehäuse (2) ableitbar ist.

2. Mehrkolbenausrücksystem (1) nach Anspruch 1, **dadurch gekennzeichnet, dass** das Mehrkolbenausrücksystem (1) eine Druckübertragungsvorrichtung (13) zur Übertragung und/oder Einleitung der Betätigungskraft auf/in eine Lamellenpaketanordnung (42) der Bremseinrichtung (41) umfasst, wobei die Druckübertragungsvorrichtung (13) mindestens eine Verbindungseinrichtung (14) und eine mit der Verbindungseinrichtung (14) wirkverbundene Zugeinrichtung (15) umfasst, wobei die Betätigungskraft des Kolbens (18) in axialer Richtung (6) in die Verbindungseinrichtung (14) einleitbar ist und wobei die mindestens eine Zugeinrichtung (15) bei dem Betätigungshub des Kolbens (18) in eine Druckstellung (12) zur Ausübung einer axial gerichteten Druckkraft gegen die Lamellenpaketanordnung (42) der Bremseinrichtung (41) überführbar ist.

3. Mehrkolbenausrücksystem (1) nach Anspruch 1 oder 2, **dadurch gekennzeichnet, dass** das Ringgehäuse (2) mindestens eine Befestigungsschnittstelle (10) zur Befestigung des Ringgehäuses (2) an einer Umgebungsstruktur aufweist.

4. Mehrkolbenausrücksystem (1) nach Anspruch 3, **dadurch gekennzeichnet, dass** die mindestens eine Befestigungsschnittstelle durch mehrere Schraubeinrichtungen gebildet ist, wobei die Schraubeinrichtungen in Umlaufrichtung des Ringgehäuses (2) um die Hauptachse (5) beabstandet zueinander an dem Ringgehäuse (2) angeordnet sind, wobei die Schraubeinrichtungen an einem Innenumfang oder an einem Außenumfang des Ringgehäuses (2) angeordnet sind.

5. Bremsvorrichtung (40) für eine Getriebeanordnung eines Fahrzeugs mit dem Mehrkolbenausrücksystem (1) nach einem der vorhergehenden Ansprüche und mit einer Bremseinrichtung, wobei die Bremseinrichtung (41) eine Lamellenpaketanordnung (42) mit einer Mehrzahl an Reiblamellen (43, 44) aufweist.

6. Bremsvorrichtung (40) nach Anspruch 5, **dadurch gekennzeichnet, dass** das Mehrkolbenausrücksystem (1) in axialer Richtung (6) vor der Bremseinrichtung (41) angeordnet ist.

7. Bremsvorrichtung (10) nach Anspruch 5 oder 6, **dadurch gekennzeichnet, dass** die mindestens eine Verbindungseinrichtung (14) der Druckübertragungsvorrichtung (3) in einer axialen Gegenrichtung durch die Lamellenpaketanordnung (42) hindurch verläuft, wobei die mindestens eine Zugeinrichtung (15) der Druckübertragungsvorrichtung (3) die Lamellenpaketanordnung (42) zumindest abschnittsweise umgreift und in der Druckstellung (12) eine Druckkraft gegen die Reiblamellen (43, 44) der Lamellenpaketanordnung (42) ausübt.

8. Bremsvorrichtung (40) nach einem der Ansprüche 5 bis 7, **dadurch gekennzeichnet, dass** die Reiblamellen (43, 44) in der Druckstellung (12) der mindestens einen Zugeinrichtung (15) reibschlüssig aneinandergelegt sind und sich in der axialen Richtung (6) an dem Ringgehäuse (2) abstützen.

9. Getriebeanordnung für ein Fahrzeug, **dadurch gekennzeichnet, dass** die Getriebeanordnung ein Getriebegehäuse, ein Getriebe und die Bremsvorrichtung (40) nach einem der Ansprüche 5 bis 7 umfasst, wobei das Getriebe und die Bremsvorrichtung (40) in dem Getriebegehäuse aufgenommen sind.

10. Getriebeanordnung nach Anspruch 9, **dadurch gekennzeichnet, dass** die Umgebungsstruktur, an der das Ringgehäuse (2) des Mehrkolbenausrücksystems (1) mittels der mindestens einen Befestigungsschnittstelle (10) befestigt ist, durch das Getriebegehäuse gebildet ist.

## Claims

1. A multi-piston disengagement system (1) for a brake device (40) of a vehicle,
having an annular housing (2), the annular housing (2) having a main axis (5), the main axis (5) defining an axial direction (6),
the annular housing (2) comprising a plurality of housing sections (4), a pressure chamber (9) which can be and/or is filled with a fluid being arranged in each housing section (4),
having a plurality of hydraulic actuating arrangements (3), each actuating arrangement (3) being assigned a housing section (4),
each actuating arrangement (3) comprising a piston assembly (17) with a hydraulically movable piston (18), the piston (18) being able to execute an actuating stroke in the axial direction (6) when subjected to hydraulic pressure and being able to generate an actuating force for activating a brake device (41) of the brake device (40),
**characterised in that**
the actuating force can be diverted into the annular housing (2).

2. The multi-piston disengagement system (1) according to claim 1, **characterised in that** the multi-piston disengagement system (1) comprises a pressure transmission device (13) for transmitting and/or introducing the actuating force to/into a disk pack arrangement (42) of the brake device (41), the pressure transmission device (13) comprising at least one connecting device (14) and a pulling device (15) operatively connected to the connecting device (14), wherein the actuating force of the piston (18) can be introduced into the connecting device (14) in the axial direction (6), and wherein the at least one pulling device (15) can be transferred into a pressure position (12) for exerting an axially directed pressure force against the disk pack arrangement (42) of the brake device (41) during the actuating stroke of the piston (18).

3. The multi-piston disengagement system (1) according to claim 1 or 2, **characterised in that** the annular housing (2) has at least one fastening interface (10) for fastening the annular housing (2) to a surrounding structure.

4. The multi-piston disengagement system (1) according to claim 3, **characterised in that** the at least one fastening interface is formed by a plurality of screw devices, the screw devices being arranged on the annular housing (2) at a distance from one another in the circumferential direction of the annular housing (2) about the main axis (5), the screw devices being arranged on an inner circumference or on an outer circumference of the annular housing (2).

5. A brake device (40) for a transmission arrangement of a vehicle with the multi-piston disengagement system (1) according to any one of the preceding claims and having a brake device, the brake device (41) having a disk pack arrangement (42) with a plurality of friction disks (43, 44).

6. The brake device (40) according to claim 5, **characterised in that** the multi-piston disengagement system (1) is arranged in the axial direction (6) upstream of the brake device (41).

7. The brake device (10) according to claim 5 or 6, **characterised in that** the at least one connecting device (14) of the pressure transmission device (3) extends in an axially opposite direction through the disk pack arrangement (42), the at least one pulling device (15) of the pressure transmission device (3) engaging around the disk pack arrangement (42) at least in sections and, in the pressure position (12), exerting a compressive force against the friction disks (43, 44) of the disk pack arrangement (42).

8. The brake device (40) according to one of claims 5 to 7, **characterized in that** the friction plates (43, 44) are frictionally engaged with one another in the pressure position (12) of the at least one pulling device (15) and are supported on the annular housing (2) in the axial direction (6).

9. A transmission arrangement for a vehicle, **characterised in that** the transmission arrangement comprises a transmission housing, a transmission and the brake device (40) according to one of claims 5 to 7, the transmission and the brake device (40) being accommodated in the transmission housing.

10. The transmission arrangement according to claim 9, **characterised in that** the surrounding structure, to which the annular housing (2) of the multi-piston disengagement system (1) is fastened by means of the at least one fastening interface (10), is formed by the transmission housing.

## Revendications

1. Système de débrayage à pistons multiples (1) pour dispositif de freinage (40) de véhicule,
comportant un carter annulaire (2), dans lequel le carter annulaire (2) présente un axe principal (5), dans lequel l'axe principal (5) définit une direction axiale (6),
dans lequel le carter annulaire (2) comprend plusieurs sections de carter (4), dans lequel, dans chaque section de carter (4), est agencée une chambre de pression (9) qui peut être remplie et/ou qui est remplie d'un fluide,
comportant plusieurs agencements d'actionnement (3) hydrauliques, dans lequel chaque agencement d'actionnement (3) est associé à une section de carter (4),
dans lequel chaque agencement d'actionnement (3) présente un ensemble piston (17) comportant un piston (18) mobile par voie hydraulique, dans lequel le piston (18) peut exécuter une course d'actionnement dans la direction axiale (6) lorsqu'il est soumis à une pression hydraulique et peut générer une force d'actionnement pour actionner un système de freinage (41) du dispositif de freinage (40),
**caractérisé en ce que**
la force d'actionnement peut être déviée dans le carter annulaire (2).

2. Système de débrayage à pistons multiples (1) selon la revendication 1, **caractérisé en ce que** le système de débrayage à pistons multiples (1) comprend un dispositif de transmission de pression (13) pour transmettre et/ou introduire la force d'actionnement à/dans un agencement de jeu de disques (42) du système de freinage (41), dans lequel le dispositif de transmission de pression (13) comprend au moins un système de liaison (14) et un système de traction (15) relié de manière fonctionnelle au système de liaison (14), dans lequel la force d'actionnement du piston (18) peut être introduite dans le système de liaison (14) dans la direction axiale (6), et dans lequel l'au moins un système de traction (15) peut être transféré dans une position de pression (12) pour exercer une force de pression dirigée axialement contre l'agencement de jeu de disques (42) du système de freinage (41) pendant la course d'actionnement du piston (18).

3. Système de débrayage à pistons multiples (1) selon la revendication 1 ou 2, **caractérisé en ce que** le carter annulaire (2) présente au moins une interface de fixation (10) pour fixer le carter annulaire (2) à une structure environnante.

4. Système de débrayage à pistons multiples (1) selon la revendication 3, **caractérisé en ce que** l'au moins une interface de fixation est formée par plusieurs systèmes à vis, dans lequel les systèmes à vis sont agencés sur le carter annulaire (2) à distance les uns des autres dans la direction circonférentielle du carter annulaire (2) autour de l'axe principal (5), dans lequel les systèmes à vis sont agencés sur une circonférence intérieure ou sur une circonférence extérieure du carter annulaire (2).

5. Dispositif de freinage (40) pour un agencement de transmission de véhicule comportant le système de débrayage à pistons multiples (1) selon l'une quelconque des revendications précédentes et comportant un système de freinage, dans lequel le système de freinage (41) présente un agencement de jeu de disques (42) comportant une pluralité de disques de friction (43, 44).

6. Dispositif de freinage (40) selon la revendication 5, **caractérisé en ce que** le système de débrayage à pistons multiples (1) est agencé dans la direction axiale (6) devant le système de freinage (41).

7. Dispositif de freinage (10) selon la revendication 5 ou 6, **caractérisé en ce que** l'au moins un système de liaison (14) du dispositif de transmission de pression (3) s'étend dans une direction axialement opposée à travers l'agencement de jeu de disques (42), dans lequel l'au moins un système de traction (15) du dispositif de transmission de pression (3) entoure l'agencement de jeu de disques (42) au moins par sections et exerce, dans la position de pression (12), une force de compression contre les disques de friction (43, 44) de l'agencement de jeu de disques (42).

8. Dispositif de freinage (40) selon l'une des revendications 5 à 7, **caractérisé en ce que** les disques de friction (43, 44) sont en prise par friction l'un avec l'autre dans la position de pression (12) de l'au moins un système de traction (15) et s'appuient sur le carter annulaire (2) dans la direction axiale (6).

9. Agencement de transmission pour véhicule, **caractérisé en ce que** l'agencement de transmission comprend un carter de transmission, une transmission et le dispositif de freinage (40) selon l'une des revendications 5 à 7, dans lequel la transmission et le dispositif de freinage (40) sont logés dans le carter de transmission.

10. Agencement de transmission selon la revendication 9, **caractérisé en ce que** la structure environnante, sur laquelle le carter annulaire (2) du système de débrayage à pistons multiples (1) est fixé par le biais d'au moins une interface de fixation (10), est formée par le carter de transmission.
